(19) Europäisches Patentamt
European Patent Office
Office européen des brevets

(11) **EP 2 989 863 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **14732496.6**

(22) Anmeldetag: **25.04.2014**

(51) Int Cl.:
***H05B 33/08*** *(2006.01)*    ***H02M 3/00*** *(2006.01)*
***H05B 37/02*** *(2006.01)*

(86) Internationale Anmeldenummer:
**PCT/AT2014/000086**

(87) Internationale Veröffentlichungsnummer:
**WO 2014/172728 (30.10.2014 Gazette 2014/44)**

(54) **BETRIEBSSCHALTUNG FÜR LEDS MIT SPANNUNGSMESSUNG**

OPERATING CIRCUIT FOR LEDS, HAVING VOLTAGE MEASUREMENT

CIRCUIT PERMETTANT DE FAIRE FONCTIONNER DES DIODES ÉLECTROLUMINESCENTES PAR MESURE DE LA TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2013 DE 102013207562**

(43) Veröffentlichungstag der Anmeldung:
**02.03.2016 Patentblatt 2016/09**

(73) Patentinhaber: **Tridonic GmbH & Co. KG**
**6851 Dornbirn (AT)**

(72) Erfinder: **KÜNG, Thomas**
**8772 Nidfurn (CH)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**US-A- 5 903 447      US-A1- 2010 039 836**
**US-A1- 2012 281 438**

**Beschreibung**

Die vorliegende Erfindung bezieht sich auf eine Schaltung zum Betrieb von Leuchtdioden (LEDs) mittels Schaltreglern bzw. Konvertern zur Bereitstellung einer Betriebsspannung bzw. eines Betriebsstroms für die LEDs.

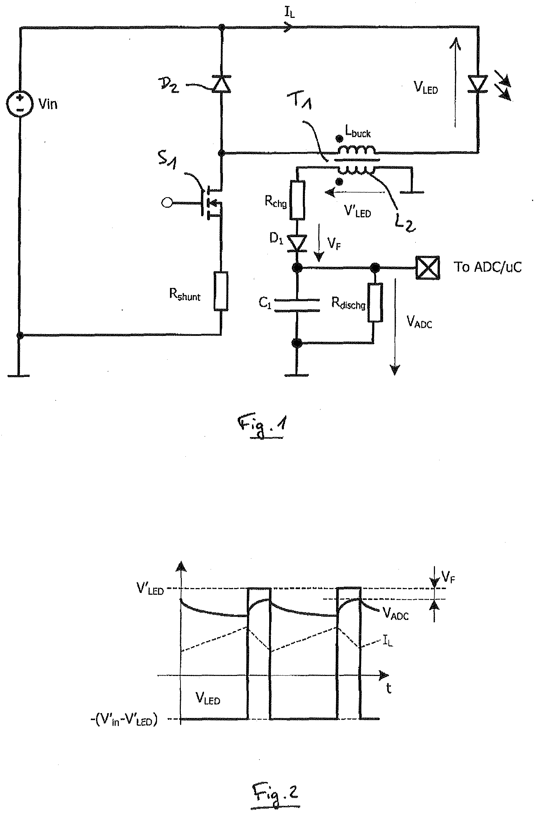

Es ist grundsätzlich bekannt, einen Abwärtswandler, auch Buck-Konverter genannt, zur Ansteuerung von LEDs zu verwenden. Wie in Figur 1 gezeigt, wird ein Schalter S1 alternierend geschlossen und geöffnet, wobei in dessen eingeschalteten Zustand eine Spule $L_{BUCK}$ energetisiert wird. Die in der Spule $L_{BUCK}$ aufgebaute Energie entlädt sich wiederum im ausgeschalteten Zustand des Schalters S1 über die LED-Strecke.

Der Schalter S1 wird von einer Steuereinheit (nicht gezeigt) getaktet. Diese Steuereinheit überwacht den Strom durch den Schalter S1 während der Einschaltphase des Schalters S1 über einen in Serie zum Schalter S1 geschalteten Messwiderstand $R_{SHUNT}$. Sobald die Spannung, die über dem Messwiderstand $R_{SHUNT}$ abgegriffen wird, einen bestimmten Maximalwert erreicht, wird der Schalter S1 geöffnet.

Weiterhin ist eine indirekte Erfassung der Spannung $V_{LED}$ über der LED-Strecke vorgesehen. Die Spannungserfassung erfolgt in der Freilaufphase des Schalters S1, d.h. bei geöffnetem, i.e. nicht leitfähigen Schalter S1, wobei in dieser Phase ein Strom durch die LED-Strecke, eine Diode D2 und die als Primärseite eines Transformators T1 ausgestaltete Spule $L_{BUCK}$ fließt.

Figur 2 zeigt den Verlauf von elektrischen Parametern aus der Schaltung gemäß Figur 1. Bei geschlossenem Schalter S1 gilt für die Spannung $V'_{LED}$ über der Sekundärseite L2 des Transformators T1 folgende Gleichung:

$$V'_{LED} = - (VIN - V_{LED}) / r$$

wobei VIN die Eingangsspannung des Abwärtswandlers darstellt, und r das Übersetzungsverhältnis des Transformators T1.

Während der Freilaufphase gilt näherungsweise wiederum folgende Gleichung:

$$V'_{LED} = V_{LED} / r$$

Nach dem Stand der Technik ist die Spule $L_{BUCK}$ als Primärwicklung eines Transformators T1 ausgestaltet, wobei die Sekundärwicklung L2 des Transformators T1 zur indirekten Erfassung der Spannung $V_{LED}$ über der LED-Strecke dient. Mit der Primärwicklung $L_{BUCK}$ ist also eine Sekundärwicklung L2 gekoppelt, mittels der in der Freilaufphase des Schalters S1 die LED-Spannung gemessen werden kann, da in der Freilaufphase die LED-Spannung voll über diese Primärwicklung $L_{BUCK}$ anliegt.

Die Sekundärwicklung L2 ist einerseits mit Masse und andererseits mit einem Widerstand $R_{CHG}$ verbunden. In Serie zu diesem Widerstand $R_{CHG}$ ist ein Hüllkurvendemodulator aufweisend eine Diode D1, einen Kondensator C1 und einen Widerstand $R_{DISCHG}$ verbunden. Diese drei Bauteile bilden einen Hüllkurvendemodulator für die Spannung $V'_{LED}$ der Sekundärwicklung L2. Die Diode D1 lässt nur eine Polarität der hochfrequenten Spannung $V'_{LED}$ passieren. Die Parallelschaltung des Kondensators Cl und des Widerstands $R_{DISCHG}$ bildet einen Tiefpass zur Entfernung des hochfrequenten Signals. Der entsprechende Verlauf der an diesem Tiefpass bzw. an dem Hüllkurvendemodulator anliegenden Spannung $V_{ADC}$ ist in Figur 2 gezeigt.

Diese Spannung $V_{ADC}$ wird bekannterweise zur Bestimmung des Einschaltzeitpunktes des Schalters S1 der Steuereinheit zugeführt. Die Spannung $V_{ADC}$ wiedergibt insbesondere während der Freilaufphase des Schalters S1 die Spannung $V_{LED}$ über der LED-Strecke, wobei dann auch das Übersetzungsverhältnis r und die Spannung $V_F$ über der Diode D1 berücksichtigt werden muss. Diese Dioden-Spannung $V_F$ hängt von dem Strom durch die Diode D1 ab. Da bei geladenem Kondensator C1 der Strom durch die Diode D1 nahezu auf Null absinkt, ist die Dioden-Spannung $V_F$ von der Ausschalt-Zeitdauer des Schalters S1 abhängig.

Der Transformator T1 und der Kondensator C1 bilden zusammen eine resonante Schaltung, die wiederum Oberschwingungen bzw. elektromagnetische Störungen verursachen kann. Problematisch ist weiterhin die Tatsache, dass der Hüllkurvendemodulator bestehend aus der Diode und dem Tiefpassfilter einen Temperatur- und Arbeitspunkts-abhängigen Spannungsfehler aufweist. Hierdurch ergeben sich erhebliche, nicht korrigierbare Messfehler.

Der Erfindung liegt daher die Aufgabe zugrunde, eine entsprechend verbesserte Betriebsschaltung für wenigstens eine LED und ein Verfahren zum Betrieb wenigstens eine LED bereitzustellen.

Die Aufgabe wird durch die Merkmale der unabhängigen Ansprüche gelöst. Die abhängigen Ansprüche bilden den zentralen Gedanken der Erfindung in besonders vorteilhafter Weise weiter. Dokument US5903447 offenbart eine Steigungskompensation zur Stromregelung. Erfindungsgemäß wird Betriebsschaltung für eine LED-Strecke vorgeschlagen, aufweisend einen Wandler, insbesondere einen Gleichspannungswandler, aufweisend einen steuerbaren Schalter und eine Induktivität zum Umwandeln einer der Betriebsschaltung zugeführten Eingangsspannung in eine Versorgungsspannung für die LED-Strecke. Die Betriebsschaltung umfasst eine Steuereinheit zum Ansteuern des Schalters, eine mit der Induktivität gekoppelte sekundärseitige Induktivität, und einen Hüllkurvendemodulator zum Detektieren der Hüllkurve der an der sekundärseitigen Induktivität anliegenden Spannung. Eine Kompensierungsschaltung ist vorgesehen zum Kompensieren eines durch den Hüllkurvendemodulator hervorgerufenen Fehlers betreffend das Detektieren der Hüllkurve.

Vorzugsweise kann mittels der Kompensierungsschaltung einem vom Hüllkurvendemodulator verursachten Temperatur- und/oder Arbeitspunkts-abhängigen Spannungsfehler entgegengewirkt werden.

Vorzugsweise kann der Hüllkurvendemodulator eine erste Diode aufweisen zum Gleichrichten der an der sekundärseitigen Induktivität anliegenden Spannung. Die Kompensierungsschaltung kann eine zweite Diode umfassen zum Kompensieren eines durch die Diode hervorgerufenen Detektierungs-Fehlers.

Vorzugsweise können beide Dioden derart angeordnet sein, dass die zweite Diode einer von der ersten Diode eingeführten Offset-Spannung entgegengewirkt.

Vorzugsweise kann die zweite Diode die Temperaturabhängigkeit der ersten Diode kompensieren, in dem vorzugsweise beide Dioden eine identische oder ähnliche Temperaturabhängigkeit ihrer Vorwärtsspannung aufweisen.

Vorzugsweise können die erste Diode und die zweite Diode baugleich sein, vorzugsweise Schottky-Dioden sein.

Vorzugsweise kann die Kompensierungsschaltung einen Operationsverstärker aufweisen, an dessen positiven Eingang die Ausgangsspannung des Hüllkurvendemodulators anliegt und an dessen negativen Eingang die zweite Diode angeschlossen ist.

Vorzugsweise kann der Hüllkurvendemodulator einen Tiefpass aufweisen.

Vorzugsweise kann dem Hüllkurvendemodulator einen Kondensator vorgeschaltet sein, um einem durch einen die sekundärseitige Induktivität aufweisenden Resonanzkreis hervorgerufenen Schwingen des durch die Induktivität fließenden Stroms entgegenzuwirken.

Vorzugsweise kann der Kompensierungsschaltung eine Pegelanpassungsschaltung nachgeschaltet sein. Vorzugsweise können die sekundärseitige Induktivität, der Hüllkurvendemodulator und die Kompensierungsschaltung eine Sensoreinheit bilden zum Erfassen der an der Induktivität anliegenden Spannung.

Vorzugsweise kann die Steuereinheit den Schalter abhängig von der Hüllkurve der an der sekundärseitigen Induktivität anliegenden Spannung steuern.

Vorzugsweise kann die Steuereinheit ausgehend von der Hüllkurve der an der sekundärseitigen Induktivität anliegenden Spannung auf die an der LED-Strecke oder an der Induktivität anliegende Spannung schließen und entsprechend den Schalter ansteuern.

Erfindungsgemäß ist eine Leuchte vorgesehen, aufweisend ein Leuchtmittel insbesondere eine LED-Strecke und eine derartige Betriebsschaltung.

Weitere Eigenschaften, Vorteile und Merkmale werden dem Fachmann nunmehr anhand der folgenden ausführlichen Beschreibung der Erfindung und unter Bezugnahme auf die Figuren der begleitenden Zeichnungen vermittelt.

Figur 1 zeigt eine Schaltungsanordnung gemäß dem Stand der Technik,

Figur 2 zeigt ein Diagramm mit dem zeitlichen Verlauf von elektrischen Parametern gemäß dem Stand der Technik,

Figur 3 zeigt eine schematische Darstellung eines Ausführungsbeispiels des erfindungsgemäßen Betriebs einer LED-Strecke.

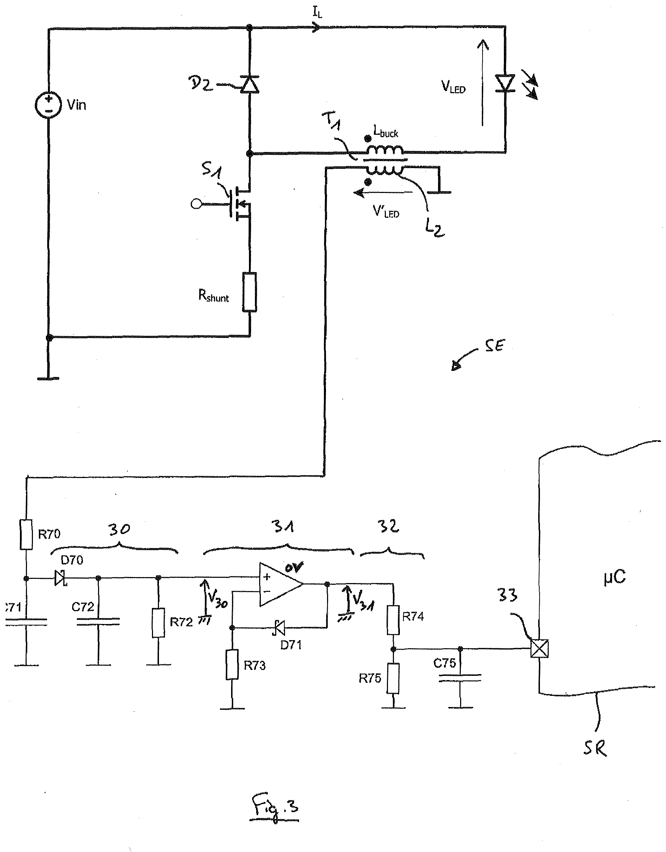

Die in Figur 3 dargestellte schematische Schaltungsanordnung dient zum Betrieb von wenigstens einer LED bzw. einer LED-Strecke. Im dargestellten Ausführungsbeispiel ist eine LED vorgesehen. Natürlich können auch mehrere in Serie und/oder parallel geschaltete LEDs von der Schaltungsanordnung betrieben werden. Die LED bzw. die mehreren seriell und/oder parallel geschalteten LEDs bilden eine sogenannte LED-Strecke.

Der Schaltung wird eine Eingangsspannung Vin zugeführt, welche eine zuvor gleichgerichtete und vorzugsweise durch eine Leistungsfaktorkorrektur-Schaltung bearbeitete Wechselspannung bzw. Netzspannung sein kann. Alternativ zu einer pulsierenden gleichgerichteten Wechselspannung kann die Eingangsspannung Vin auch eine z.B. von einer Batterie gelieferte konstante Spannung sein. Eine derartige konstante Spannung ausgehend von einer Batterie wird beispielsweise in einem Notlichtgerät bereitgestellt.

Die LED-Strecke ist in Serie mit einer Induktivität $L_{Buck}$ und einem Schalter S1 verbunden. Zudem weist die Schaltungsanordnung eine Diode D2, die parallel zu der LED-Strecke und der Induktivität L1 geschaltet ist. die Kathode der Diode D2 ist mit der Anode der LED bzw. mit der Anode mindestens einer LED der LED-Strecke verbunden. Die Anode der Diode D2 ist wiederum mit dem Verbindungspunkt zwischen der Induktivität $L_{Buck}$ und dem Schalter S1 verbunden. Parallel zu der LED-Strecke kann ein Kondensator (nicht gezeigt) geschaltet sein. Die Eingangsspannung Vin ist an dem Verbindungspunkt zwischen der Diode D2 und der LED-Strecke angelegt.

Der Schalter S1 wird von einer Steuereinheit bzw. einer Steuer-Regeleinheit SR alternierend geschlossen und geöffnet. Die Steuereinheit SR kann vorzugsweise als integrierte Schaltung, insbesondere ASIC oder Microcontroller oder eine Hybridversion davon, ausgestaltet sein.

Im geschlossenen Zustand des Schalters S1 fließt ein Strom $I_L$ durch die LED-Strecke, die Induktivität $L_{Buck}$ und den Schalter S1, wodurch sich die Induktivität $L_{Buck}$ auflädt. Im ausgeschalteten Zustand des Schalters S1 entlädt sich wiederum diese im Magnetfeld der Induktivität $L_{Buck}$ gespeicherte Energie in Form eines Stroms $I_L$ über die Diode D2 und die LED-Strecke.

Als Schalter S1 wird vorzugsweise ein Transistor in Form eines Feldeffekttransistors oder auch Bipolartransistors verwendet. Der Schalter S1 wird hochfrequent von der Steuereinheit SR geschaltet, typischerweise in einem Frequenzbereich von über 10 kHz.

Die Steuereinheit SR gibt zur Regelung der der LED-Strecke zugeführten Leistung bzw. zur Regelung des der LED-Strecke zugeführten Stroms die Taktung des Schalters S1 vor. Zur Festlegung des genormten Ausschaltzeitpunkts des Schalters S1 verwendet die Steuereinheit SR beispielsweise eine Sensoreinheit in Form eines Messwiderstands $R_{Shunt}$, der in Serie zum Schalter S1 vorzugsweise zwischen dem Schalter und Masse geschaltet ist. Die dem Messwiderstand $R_{Shunt}$ abgegriffene Spannung dient zur Überwachung des Stromflusses durch den Schalter S1. Entsprechend kann die Steuereinheit SR den Schalter S1 dann ausschalten, wenn der Stromfluss durch den Schalter S1 einen bestimmten Maximalwert erreicht bzw. übertrifft.

Zur Festlegung der Ausschaltzeitdauer des Schalters S1 bzw. zur Festlegung des Zeitpunkts des Wiedereinschaltens des Schalters S1 wird eine weitere Sensoreinheit SE innerhalb des Stromzweiges, der während der Freilaufphase vom Strom durchflossen wird, benötigt.

Gemäß dem Ausführungsbeispiel der Figur 3 umfasst eine derartige Sensoreinheit SE eine Sekundärwicklung L2 die mit der Induktivität $L_{Buck}$ gekoppelt ist. Insbesondere kann die Induktivität $L_{Buck}$ die Primärwicklung eines Transformators T1 bilden, der wiederum sekundärseitig die Sekundärwicklung L2 aufweist. Durch diese Sekundärwicklung L2 kann der Magnetisierungszustand der Induktivität $L_{Buck}$ erfasst werden bzw. es kann unter Berücksichtigung des Übersetzungsverhältnisses r des Transformators T1 die Spannung an der Induktivität $L_{Buck}$ erfasst werden. Dies kann zur indirekten Erfassung der Spannung $V_{LED}$ über der LED-Strecke dienen.

Die Überwachung des zeitlichen Spannungsverlaufs an der Induktivität $L_{Buck}$ ermöglicht wiederum in bekannter Weise eine Aussage über den vorteilhaften Wiedereinschaltzeitpunkt des Schalters S1.

Die in Figur 3 gezeigte Schaltungsanordnung basiert auf einem Abwärtswandler, auch Buck-Konverter genannt. Alternativ können auch andere Schaltungstopologien angewandt werden, wobei insbesondere eine Induktivität als energieübertragendes Bauelement benutzt wird, wie beispielsweise bei einem Aufwärtswandler oder Boost Konverter, bei einem Inverswandler oder Buck-Boost-Konverter, oder bei einem Durchflusswandler oder Forward-Konverter. Die in diesen alternativen Topologien eingesetzte und als energieübertragendes Bauelement benutzte Induktivität entspricht der in Fig. 3 gezeigten Induktivität $L_{Buck}$ und wird wiederum mit der in Fig. 3 gezeigten sekundärseitigen Induktivität L2 gekoppelt.

Der Schalter S1 kann so gesteuert werden, dass die Steuereinheit SR die Zeitdauer zwischen einem Ausschalten und einem folgenden Einschalten des Schalters S1 abhängig von der Spannung $VL_{Buck}$ über der Induktivität $L_{Buck}$ bestimmt. Dabei wird vorzugsweise die Steuereinheit SR die Spannung über der Induktivität $L_{Buck}$ mittels der induktiv bzw. transformatorisch an die Induktivität $L_{Buck}$ gekoppelte Sekundärwicklung L2 bestimmen, da $VL_{Buck} = V'_{LED} \cdot r$

Wie eingangs beschrieben, ergeben sich für die Spannung $V'_{LED}$ über der sekundärseitigen Induktivität L2 vorzugsweise folgende Gleichungen:

$$V'_{LED} = - (VIN - V_{LED}) / r,$$

bei geschlossenem Schalter S1, und

$$V'_{LED} = V_{LED} / r,$$

bei geöffnetem Schalter S1.

Entsprechend kann die Sensoreinheit SE während der Einschaltzeitdauer und während der Ausschaltzeitdauer des Schalters S1 zur Steuerung des Schalters S1 herangezogen werden.

Während der Ausschaltphase des Schalters S1 ist die Diode D2 durchgeschaltet, d.h. leitend, so dass über ihr nur eine zu vernachlässigende Spannung von ca. 0,7V abfällt. Die Spannung über der Induktivität $L_{Buck}$ unterscheidet sich nur durch diese über der Diode D2 abfallende Spannung von der Spannung $V_{LED}$ über der LED-Strecke. Es kann entsprechend entweder unter Vernachlässigung oder unter Beachtung dieser über der Diode D2 abfallenden Spannung auf die Spannung über der LED-Strecke geschlossen werden.

Die Sensoreinheit SE, die ausgangsseitig an einem Pin bzw. Eingang 33 der Steuereinheit SR angeschlossen ist, umfasst zusätzlich zur Sekundärwicklung L2 noch weitere Bauelemente, und zwar vorzugsweise einen Widerstand R70, einen eingangsseitigen Kondensator C71, einen Hüllkurvendemodulator 30, eine Kompensierungsschaltung 31, eine Pegelanpassungsschaltung 32 und einen ausgangsseitigen Kondensator C75.

Zunächst ist ein Widerstand R70 vorgesehen, der in Serie zur Sekundärwicklung L2 angeordnet ist, wobei der andere Anschluss der Sekundärwicklung L2 mit Masse verbunden ist. Der Ausgangsanschluss des Widerstands R70 ist mit dem Hüllkurvendemodulator 30 verbunden, nämlich mit der Anode einer Diode D70 des Hüllkurvendemodulators 30.

Der Hüllkurvendemodulator 30 ist gebildet durch die Diode D70, einen Kondensator C72 und einen Widerstand R72. Die Kathode der Diode D70 ist jeweils mit einem Anschluss des Kondensators C72 und des Widerstands R72 verbunden, wobei der Kondensator C72 und der Widerstand R72 parallel zwischen der Kathode der Diode D70 und Masse angeordnet sind.

Die Diode D70 ist vorzugsweise eine Gleichrichtungs-Diode. Entsprechend lässt sie nur eine Polarität der vorzugsweise hochfrequenten Spannung V'$_{LED}$ passieren. Die Diode D70 ist dazu geeignet, die Spannung V'$_{LED}$ in Gleichspannung umzuwandeln. Die Anordnung des Kondensators C72 und des Widerstands R72 dient dazu, dass die Ausgangsspannung V30 des Hüllkurvendemodulators 30 die Hüllkurve der durch die Diode D70 gleichgerichteten Spannung folgt. Die Kombination aus Kondensator C72 und Widerstand R72 bildet einen Tiefpassfilter.

An Eingang des Hüllkurvendemodulators 30 ist ein Kondensator C71 geschaltet. Dieser Kondensator C71 ist einerseits mit Masse und andererseits mit dem Verbindungspunkt zwischen dem Widerstand R70 und dem Hüllkurvendemodulator 30 angeordnet.

Die Verwendung des weiteren Kondensators C71 verringert ein Schwingen des erfassten LED-Stroms, das durch einen Resonanzkreis aufweisend die Sekundärwicklung L2 entstehen könnte. Der Kondensator C71 bildet zusammen mit der Sekundärwicklung L2 und dem Widerstand R70 einen Schwingkreis in Form einer Serien-Resonanzschaltung, wobei der Kondensator C71 diesen Schwingkreis vorzugsweise auf eine kritische Schwingungsdämpfung derart einstellt, dass im LED-Strom Oberschwingungen bzw. elektromagnetische Störungen vermieden werden. Vorzugsweise dämpft der Kondensator C71 Oberschwingungen, die durch die resonante Schaltung bestehend aus der Sekundärwicklung L2 und dem Kondensator C72 erzeugt werden. Die Gefahr eines Aufschwingens bei der Sekundärwicklung L2 wird vorzugsweise durch den Widerstand R70 gedämpft.

Die Diode D70 beaufschlägt durch ihre Vorwärtsspannung bzw. Flussspannung eine Offset-Spannung und beeinflusst so die Detektion der Hüllkurve durch den Hüllkurvendemodulator 30. Diese Offset-Spannung kann von unterschiedlichen Parametern abhängig sein, wie z.B. von der Temperatur oder vom Vorwärtsstrom bzw. vom Arbeitspunkt der Diode.

Wie in Fig. 3 gezeigt, wird die Ausgangsspannung V30 des Hüllkurvendemodulators 30 der Kompensierungsschaltung 31 zugeführt. Diese Kompensierungsschaltung 31 weist einen Operationsverstärker OV, einen Widerstand R73 und eine Diode D71 auf. Das vom Hüllkurvendemodulator 30 erzeugte Signal V30 wird dem nichtinvertierenden bzw. positiven Eingang des Operationsverstärkers OV zugeführt. Zwischen dem invertierende bzw. negativen Eingang des Operationsverstärkers und Masse ist der Widerstand R73 angeordnet. Die Diode ist kathodenseitig mit dem negativen Eingang des Operationsverstärkers OV und anodenseitig mit dessen Ausgang verbunden. Der Ausgang des Operationsverstärkers OV entspricht zugleich der Ausgangsspannung V31 der Kompensierungsschaltung 31. Als Operationsverstärker OV kann z.B. das Bauteil LM258 von Texas Instruments benutzt werden.

Die die Hüllenkurve wiedergebende Spannung V30 wird durch den Operationsverstärker OV verstärkt, so dass die Diode leitend D71 wird. Ein Strom fließt dann durch den Widerstand R73, so dass aufgrund der Rückkopplung die am Widerstand R73 anliegende Spannung V$_{R73}$ der Spannung V30 entspricht. Die Anordnung der Diode D71 zwischen dem Widerstand R73 und dem Ausgang der Kompensierungsschaltung 31 hat zur Folge, dass die Ausgangsspannung V31 die oben erwähnte von der Diode D70 eingeführte Offset-Spannung kompensieren kann.

Um eine optimale Kompensierung der Offset-Spannung zu gewährleisten, sind die verwendeten Dioden D70, D71 vorzugsweise vom selben Typ bzw. sie sind baugleich. Z.B. sind beide Dioden Schottky-Dioden mit vorzugsweise relativ niedrigerer Vorwärtsspannung. Durch den Einsatz von Schottky-Dioden kann die Wirksamkeit der Kompensierungsschaltung 31 verbessert werden. Alternativ können die zwei Dioden D70, D71 Silizium-Dioden sein. Die Dioden D70, D71 basieren auf derselben Dioden-Technologie.

Vorzugsweise weisen die Dioden D70, D71 im Durchlassbereich dieselbe oder eine ähnliche Strom-Spannungs-Kennlinie auf. Vorzugsweise verlaufen ihre Strom-Spannungs-Kennlinien zumindest im Durchlassbereich parallel bzw. im Wesentlichen parallel zueinander. Diese Kennlinien weisen vorzugsweise einen identischen oder nahezu identischen Steigungsverlauf auf.

Die Temperaturabhängigkeit der Vorwärtsspannung beider Dioden D70, D71 ist vorzugsweise identisch oder ähnlich bzw. vergleichbar oder zumindest im Wesentlich vergleichbar. Zur Verbesserung der Kompensierung der Offset-Spannung sollten die Dioden D70, D71 vorzugsweise thermisch eng gekoppelt sein. Vorzugsweise ist der Unterschied zwischen den Vorwärtsspannungen beider Dioden D70, D71 unabhängig von der Temperatur, wobei in dem Fall der resultierende Messfehler von der Steuereinheit SR berücksichtigt werden kann.

Durch die Verschaltung der beiden vorzugsweise baugleichen Dioden D70, D71 werden unterschiedliche Parameter, wie beispielsweise die Temperatur, der Vorwärtsstrom etc. kompensiert, die sonst die Messung bzw. die Detektion der Hüllkurve verfälschen würden. Insbesondere wird mittels der Kompensierungsschaltung 31 dem vom Hüllkurvendemodulator 30 verursachten Temperatur- und/oder Arbeitspunkts-abhängigen Spannungsfehler entgegengewirkt.

Als weitere Maßnahme zur Verbesserung der Kompensierung der Offset-Spannung sollten die Widerstände R72, R73 denselben bzw. einen ähnlichen Widerstandswert aufweisen.

Der Ausgang V31 des Operationsverstärkers OV wird dann vorzugsweise unter Pegelanpassung durch einen Spannungsteiler R74, R75 dem Eingang 33 der vorzugsweise als Microcontroller ausgestalteten Steuereinheit SR zugeführt. Bei dieser Ausführungsform sind somit die Anforderungen an den Erfassungsbereich der Steuereinheit SR verringert. Der ausgangsseitige Kondensator C75 dient zusätzlich zur Filterung.

**Patentansprüche**

1. Betriebsschaltung für eine LED-Strecke, aufweisend:

    a) einen Wandler, insbesondere einen Gleichspannungswandler, aufweisend einen steuerbaren Schalter (S1) und eine Induktivität ($L_{Buck}$) zum Umwandeln einer der Betriebsschaltung zugeführten Eingangsspannung (Vin) in eine Versorgungsspannung für die LED-Strecke,
    b) eine Steuereinheit (SR) zum Ansteuern des Schalters (S1),
    c) eine mit der Induktivität ($L_{Buck}$) gekoppelte sekundärseitige Induktivität (L2),
    d) einen Hüllkurvendemodulator (30) zum Detektieren der Hüllkurve der an der sekundärseitigen Induktivität (L2) anliegenden Spannung ($V'_{LED}$), und **gekennzeichnet durch**
    e) eine Kompensierungsschaltung (31) zum Kompensieren eines durch den Hüllkurvendemodulator (30) hervorgerufenen Fehlers betreffend das Detektieren der Hüllkurve,
    f) wobei der Hüllkurvendemodulator (30) eine erste Diode (D70) aufweist zum Gleichrichten der an der sekundärseitigen Induktivität (L2) anliegenden Spannung ($V'_{LED}$), und
    g) die Kompensierungsschaltung (31) eine zweite Diode (D71) umfasst zum Kompensieren eines durch die Diode (D70) hervorgerufenen Detektierungs-Fehlers.

2. Betriebsschaltung gemäß Anspruch 1, wobei mittels der Kompensierungsschaltung (31) einem vom Hüllkurvendemodulator (30) verursachten Temperatur- und/oder Arbeitspunkts-abhängigen Spannungsfehler entgegengewirkt.

3. Betriebsschaltung gemäß einem der vorigen Ansprüche, wobei beide Dioden (D71, D72) derart angeordnet sind, dass die zweite Diode (D71) einer von der ersten Diode (D70) eingeführten Offset-Spannung entgegenwirkt.

4. Betriebsschaltung gemäß einem der vorigen Ansprüche, wobei die zweite Diode (D71) die Temperaturabhängigkeit der ersten Diode (D70) kompensiert, in dem vorzugsweise beide Dioden (D71, D72) eine identische oder ähnliche Temperaturabhängigkeit ihrer Vorwärtsspannung aufweisen.

5. Betriebsschaltung gemäß einem der vorigen Ansprüche, wobei die erste Diode (D70) und die zweite Diode (D71) baugleich sind, und vorzugsweise Schottky-Dioden sind.

6. Betriebsschaltung gemäß einem der vorigen Ansprüche, wobei die Kompensierungsschaltung (31) einen Operationsverstärker (OV) aufweist, an dessen positiven Eingang die Ausgangsspannung (V30) des Hüllkurvendemodulators (30) anliegt und an dessen negativen Eingang die zweite Diode (D71) angeschlossen ist.

7. Betriebsschaltung gemäß einem der vorigen Ansprüche, wobei der Hüllkurvendemodulator (30) einen Tiefpass (R72, C72) aufweist.

8. Betriebsschaltung gemäß einem der vorigen Ansprüche, wobei dem Hüllkurvendemodulator (30) einen Kondensator (C71) vorgeschaltet ist, um einem durch einen die sekundärseitige Induktivität (L2) aufweisenden Resonanzkreis hervorgerufenen Schwingen des durch die Induktivität (LBuck) fließenden Stroms entgegenzuwirken.

9. Betriebsschaltung gemäß einem der vorigen Ansprüche, wobei der Kompensierungsschaltung (31) eine Pegelanpassungsschaltung (R74, R75) nachgeschaltet ist.

10. Betriebsschaltung gemäß einem der vorigen Ansprüche, wobei die sekundärseitige Induktivität (L2), der Hüllkurvendemodulator (30) und die Kompensierungsschaltung (31) eine Sensoreinheit (SE) bilden zum Erfassen der an der Induktivität ($L_{Buck}$) anliegenden Spannung ($VL_{Buck}$).

11. Betriebsschaltung gemäß einem der vorigen Ansprüche, wobei die Steuereinheit (SR) den Schalter (S1) abhängig von der Hüllkurve der an der sekundärseitigen Induktivität (L2) anliegenden Spannung ($V'_{LED}$) steuert.

12. Betriebsschaltung gemäß einem der vorigen Ansprüche, wobei ausgehend von der Hüllkurve der an der sekundärseitigen Induktivität (L2) anliegenden Spannung ($V'_{LED}$) die Steuereinheit (SR) auf die an der LED-Strecke oder an der Induktivität ($L_{Buck}$) anliegende Spannung ($V_{LED}$, $VL_{Buck}$) schließt und entsprechend den Schalter (S1) ansteuert.

13. Leuchte, aufweisend ein Leuchtmittel insbesondere eine LED-Strecke und eine Betriebsschaltung gemäß einem der vorigen Ansprüche.

**Claims**

1. Operating circuit for an LED series comprising:

    a) a converter, in particular a DC-DC converter, comprising a controllable switch (S1) and an inductance ($L_{Buck}$) for converting an input voltage ($V_{in}$) supplied to the operating circuit into a supply voltage for the LED series,

b) a control unit (SR) for controlling the switch (S1),

c) a secondary inductance (L2) coupled to the inductor ($L_{Buck}$),

d) an envelope curve demodulator (30) for detecting the envelope curve of the voltage ($V'_{LED}$) applied to the secondary inductance (L2), and

e) a compensation circuit (31) for compensating for an error caused by the envelope curve demodulator (30) concerning the detection of the envelope curve,

f) wherein the envelope curve demodulator (30) comprises a first diode (D70) for rectifying the voltage ($V'_{LED}$) applied to the secondary inductance (L2), and

g) the compensation circuit (31) comprises a second diode (D71) for compensating for a detection error caused by the diode (D70).

2. Operating circuit according to claim 1, wherein a temperature and/or operating point-dependent voltage error caused by the envelope curve demodulator (30) is counteracted by means of the compensation circuit (31).

3. Operating circuit according to one of the preceding claims, wherein both diodes (D71, D72) are so arranged that the second diode (D71) counteracts an offset voltage introduced by the first diode (D70).

4. Operating circuit according to one of the preceding claims, wherein the second diode (D71) compensates for the temperature dependence of the first diode (D70), wherein the preferably two diodes (D71, D72) have an identical or similar temperature dependence of their forward voltage.

5. Operating circuit according to one of the preceding claims, wherein the first diode (D70) and the second diode (D71) are structurally identical, and are preferably Schottky diodes.

6. Operating circuit according to one of the preceding claims, wherein the compensation circuit (31) comprises an operational amplifier (OV), the positive input of which is connected to the output voltage (V30) of the envelope curve demodulator (30), wherein the second diode (D71) is connected to the negative input of the envelope detector.

7. Operating circuit according to one of the preceding claims, wherein the envelope curve demodulator (30) comprises a low-pass filter (R72, C72).

8. Operating circuit according to one of the preceding claims, wherein a capacitor (C71) is connected upstream of the envelope curve demodulator (30) in order to counteract an oscillation of the current flowing through the inductor ($L_{Buck}$) caused by a resonant circuit comprising the secondary-side inductance (L2).

9. Operating circuit according to one of the preceding claims, wherein a level-adjustment circuit (R74, R75) is connected downstream of the compensation circuit (31).

10. Operating circuit according to one of the preceding claims, wherein the secondary inductance (L2), the envelope curve demodulator (30) and the compensation circuit (31) form a sensor unit (SE) for detecting the voltage ($VL_{Buck}$) applied to the inductance ($V_{Buck}$).

11. Operating circuit according to one of the preceding claims, wherein the control unit (SR) controls the switch (S1) as a function of the envelope curve of the voltage ($V'_{LED}$) applied to the secondary-side inductance (L2).

12. Operating circuit according to one of the preceding claims, wherein, based on the envelope curve of the voltage ($V'_{LED}$) applied to the secondary-side inductance (L2), the control unit (SR) is connected to the voltage ($V_{LED}$, $VL_{Buck}$) applied to the LED series or to the inductance ($L_{Buck}$), and the switch (S1) correspondingly controlled.

13. Luminaire comprising a lighting means, in particular an LED series, and an operating circuit according to one of the preceding claims.

**Revendications**

1. Circuit d'exploitation pour une ligne de LED, comprenant :

a) un convertisseur, plus particulièrement un convertisseur de tension continue, comprenant un interrupteur contrôlable (S1) et une inductance ($L_{Buck}$) pour la conversion d'une tension d'entrée (Vin) appliquée au circuit d'exploitation en une tension d'alimentation pour la ligne de LED,

b) une unité de commande (SR) pour le pilotage de l'interrupteur (S1),

c) une inductance côté secondaire (L2) couplée à l'inductance ($L_{Buck}$),

d) un détecteur d'enveloppe (30) pour la détection de l'enveloppe de la tension ($V'_{LED}$) appliquée à l'inductance côté secondaire (L2) et

e) un circuit de compensation (31) pour compenser une erreur concernant la détection de l'enveloppe provoquée par le détecteur d'enveloppe (30),

f) le détecteur d'enveloppe (30) comprenant une première diode (D70) pour le redressement de la tension (V'$_{LED}$) appliquée à l'inductance côté secondaire (L2) et

g) le circuit de compensation (31) comprenant une deuxième diode (D71) pour compenser une erreur de détection provoquée par la diode (D70).

2. Circuit d'exploitation selon la revendication 1, le circuit de compensation (31) permettant de compenser une erreur de tension dépendant de la température et/ou du point de fonctionnement provoquée par le détecteur d'enveloppe (30).

3. Circuit d'exploitation selon l'une des revendications précédentes, les deux diodes (D71, D72) étant disposées de façon à ce que la deuxième diode (D71) compense une tension d'offset introduite par la première diode (D70).

4. Circuit d'exploitation selon l'une des revendications précédentes, la deuxième diode (D71) compensant la dépendance en fonction de la température de la première diode (D70), grâce au fait que, de préférences les deux diodes (D71, D72) présentent une dépendance en fonction de la température identique ou similaire à leur tension directe.

5. Circuit d'exploitation selon l'une des revendications précédentes, la première diode (D70) et la deuxième diode (D71) étant identiques, et de préférence étant des diodes Schottky.

6. Circuit d'exploitation selon l'une des revendications précédentes, le circuit de compensation (31) comprenant un amplificateur opérationnel (OV) à l'entrée positive duquel est appliquée la tension de sortie (V30) du détecteur d'enveloppe (30) et à l'entrée négative duquel est connectée la deuxième diode (D71).

7. Circuit d'exploitation selon l'une des revendications précédentes, le détecteur d'enveloppe (30) comprenant un filtre passe-base (R72, C72).

8. Circuit d'exploitation selon l'une des revendications précédentes, un condensateur (C71) étant branché en amont du détecteur d'enveloppe (30) afin de compenser une oscillation du courant s'écoulant à travers l'inductance (L$_{Buck}$), provoquée par un circuit de résonance comprenant l'inductance côté secondaire (L2).

9. Circuit d'exploitation selon l'une des revendications précédentes, un circuit d'adaptation de niveau (R74, R75) étant branché en aval du circuit de compensation (31).

10. Circuit d'exploitation selon l'une des revendications précédentes, l'inductance côté secondaire (L2), le détecteur d'enveloppe (30) et le circuit de compensation (31) formant une unité de capteur (SE) pour la mesure de la tension (VL$_{Buck}$) appliquée à l'inductance (L$_{Buck}$).

11. Circuit d'exploitation selon l'une des revendications précédentes, l'unité de commande (SR) contrôlant l'interrupteur (S1) en fonction de l'enveloppe de la tension (V'$_{LED}$) appliquée à l'inductance côté secondaire (L2).

12. Circuit d'exploitation selon l'une des revendications précédentes, l'unité de commande (SR) déterminant, à partir de l'enveloppe de la tension (V'$_{LED}$) appliquée à l'inductance côté secondaire (L2), la tension (V$_{LED}$, VL$_{Buck}$) appliquée à la ligne de LED ou à l'inductance (L$_{Buck}$) et la contrôlant en fonction de l'interrupteur (S1).

13. Luminaire comprenant un moyen d'éclairage, plus particulièrement une ligne de LED et un circuit d'exploitation selon l'une des revendications précédentes.

Fig. 1

Fig. 2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5903447 A